# EUROPEAN PATENT APPLICATION

(11) **EP 4 119 745 A1**
(43) Date of publication of application: **18.01.2023**
(21) Application number: 22177381.5
(22) Date of filing: 06.06.2022
(51) Int. Cl.: E04H 6/34, E04H 6/36, B60S 13/00

(54) **LIFT CARRIER**

(30) Priority: 15.07.2021 JP 2021117224
(71) Applicant: Toyota Jidosha Kabushiki Kaisha, Toyota-shi, Aichi-ken 471-8571 (JP)
(72) Inventor: KITAJIMA, Toshiki, Toyota-shi, 471-8571 (JP); WATANABE, Norinao, Toyota-shi, 471-8571 (JP); NAKAMURA, Yutaka, Toyota-shi, 471-8571 (JP); KAJITA, Naoya, Toyota-shi, 471-8571 (JP); NAKANO, Kenji, Toyota-shi, 471-8571 (JP); SANNOMIYA, Takafumi, Toyota-shi, 471-8571 (JP); SHIMIZU, Yasutada, Toyota-shi, 471-8571 (JP); YASUDA, Kohei, Toyota-shi, 471-8571 (JP)
(74) Representative: D Young & Co LLP

(57) **Abstract**

A lift carrier (10) includes: a carrier frame (200) that is inserted under a vehicle (1) to be transported; a lifting mechanism that lifts and lowers the carrier frame (200) to lift and lower the vehicle; and a carrier body (100) configured to move the carrier frame (200). The carrier frame (200) includes a rear end frame (40)that includes a pair of arm fixing plates (46) provided so as to protrude outward in a lateral direction of the vehicle from lower surfaces of the side members (41). The top plate (50) is fixed to the rear end frame (40), fixes a plurality of rear end arms at such positions that the rear end arms are sandwiched between the top plate (50) and the arm fixing plates (46), and fixes an upper end face of a lifting unit (64) that is the lifting mechanism.

## Description

### BACKGROUND OF THE INVENTION

### 1. Field of the Invention

The present disclosure relates to a technology for a lift carrier for transporting a vehicle.

### 2. Description of Related Art

Japanese Unexamined Patent Application Publication No. 2019-78099 (JP 2019-78099 A) discloses a technology related to a lift carrier that supports a vehicle and lifts and lowers the vehicle so that it can transport the vehicle. In the lift carrier of this technology, tires of the vehicle are supported by arm portions when a carrier frame is inserted under the vehicle. The vehicle is lifted and lowered by lifting and lowering the carrier frame by a base end elevating portion and a tip end elevating portion. A carrier body is connected to the carrier frame. The carrier body includes drive wheel units and a transport control unit, and transports the vehicle in a desired direction.

### SUMMARY OF THE INVENTION

The arm portions that support the tires are supported by the carrier frame. When the vehicle to be transported is lifted and lowered, the arm portions receive the load of the vehicle. The carrier frame is therefore required to be strong enough to support the load of the vehicle. However, since the carrier frame needs to be inserted under the vehicle, there are restrictions on the size in the height direction of the carrier frame. Therefore, the lift carrier is required to have a frame structure that provides enough strength to support the vehicle in a limited height space.

The present disclosure was made in view of the above problem, and the present disclosure provides a lift carrier that provides enough frame rigidity to support a vehicle to be transported in a limited height space.

In order to solve the above problem, one aspect of the present disclosure is applied to a lift carrier. A lift carrier includes: a carrier frame that is inserted, in a longitudinal direction of the vehicle, under a vehicle to be transported; a plurality of arms configured to protrude outward in a lateral direction of the vehicle from the carrier frame at positions forward and rearward of treads of a plurality of tires of the vehicle and support the tires when in a supporting state; a lifting mechanism that lifts and lowers the vehicle by lifting and lowering the carrier frame in the supporting state; and a carrier body connected to a front end side of the carrier frame and configured to move the carrier frame as desired in the supporting state. The carrier frame includes a main frame extending from the front end side of the carrier frame toward a rear end side of the carrier frame, and a rear end frame joined to the main frame and located on the rear end side of the carrier frame. The rear end frame includes a pair of side members, a pair of cross members provided so as to connect ends of the side members, and a pair of arm fixing plates provided so as to protrude outward in the lateral direction of the vehicle beyond lower surfaces of the side members. A top plate covering the rear end frame is located on an upper surface of the rear end frame. The arms include a plurality of rear end arms supported by the rear end frame. The lifting mechanism includes at least one lifting unit stored inside the rear end frame. The top plate is fixed to the rear end frame. The top plate fixes the rear end arms at positions at which the rear end arms are sandwiched between the top plate and the arm fixing plates. The top plate fixes an upper end face of the at least one lifting unit.

In the lift carrier according to the above aspect of the present disclosure, arm fixing portions of the rear end arms may be located between the cross members in the longitudinal direction of the vehicle. The top plate may be fixed to the cross members and the side members.

In the lift carrier according to the above aspect of the present disclosure, the at least one lifting unit may include an air spring that expands and contracts according to a pressure of compressed air. The lift carrier may further include a load distribution plate interposed between the air spring of the at least one lifting unit and the top plate. The air spring may have a cylindrical shape, and the load distribution plate may include a thick portion with a cylindrical shape and protruding into an inside of a cylinder of the air spring, and the thick portion may be thicker than a remainder of the load distribution plate.

The lift carrier according to the above aspect of the present disclosure may further include a reinforcing member provided between the cross members and extending in the longitudinal direction of the vehicle so as to divide a space inside the rear end frame into two storage chambers. The reinforcing member may be fixed to the top plate, and the at least one lifting unit may be two lifting units, and the two lifting units may be independently stored in the two storage chambers.

In the lift carrier according to the above aspect of the present disclosure, the rear end frame may include a plurality of ribs provided so as to extend outward in the lateral direction of the vehicle from the side members. The ribs may be joined to the arm fixing plates, and the top plate may be fixed to the ribs.

In the lift carrier according to the above aspect of the present disclosure, an amount by which the arm fixing plates protrude beyond the side members may be equal to an amount by which the ribs protrude from the side members.

According to the present disclosure, the top plate fixed to the upper surface of the rear end frame fixes the rear end arms at such positions that the rear end arms are sandwiched between the top plate and the arm fixing plates, and fixes the upper end face of the at least one lifting unit. According to such a frame structure, sufficient frame rigidity against bending stress that is applied from the upper end face of the lifting unit to the rear end arms is provided in a limited height space.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a perspective view of a lift carrier 10 according to an embodiment of the present disclosure;
FIG. 2 is a top view of the lift carrier 10 with the carrier frame being inserted and a first arm group 211 and a second arm group 212 in a releasing state in the operation of supporting a vehicle;
FIG. 3 is a top view of the lift carrier 10 supporting a vehicle 1 to be transported, with the first arm group 211 and the second arm group 212 in a supporting state;
FIG. 4 is a side view of the lift carrier 10 and shows an example of the operation of lifting the vehicle 1 to be transported (lowered state);
FIG. 5 is a side view of the lift carrier 10 and shows an example of the operation of lifting the vehicle 1 to be transported (lifted state);
FIG. 6 is a top view of the lift carrier 10;
FIG. 7 is a perspective view of the structure around a rear end frame 40 of the lift carrier 10 as viewed obliquely from above;
FIG. 8 is a top view of the rear end frame 40 of the lift carrier 10 and the structure around the rear end frame 40;
FIG. 9 is a bottom view of the rear end frame 40 of the lift carrier 10 and the structure around the rear end frame 40;
FIG. 10 is a perspective view of the rear end frame 40 with an arm fixing plate 46 joined to a side member 41 and ribs 47;
FIG. 11 is a perspective view of the rear end frame 40 and components around the rear end frame 40 taken along line I-I in FIG. 8; and
FIG. 12 is an enlarged sectional view of a region II in FIG. 11.

### DETAILED DESCRIPTION OF EMBODIMENTS

Embodiment of the present disclosure will be described below with reference to the drawings. When the number, quantity, amount, range, etc. of each element are mentioned in the following embodiments, the present disclosure is not limited to the mentioned numerical values unless otherwise specified or unless the number, quantity, amount, range, etc. of the element are obviously limited to the mentioned numerical values in principle. Structures etc. that will be described in the following embodiments are not necessarily essential to the present disclosure unless otherwise specified or unless structures etc. are obviously limited to the mentioned structures etc. in principle.

### 1. Lift Carrier

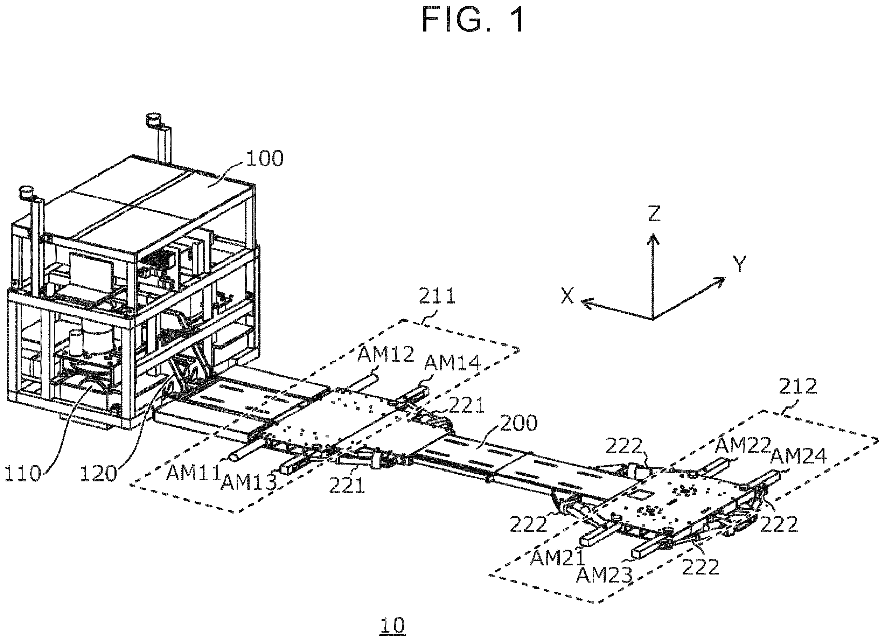

FIG. 1 is a perspective view of a lift carrier 10 according to an embodiment of the present disclosure. The lift carrier 10 includes a carrier body 100 and a carrier frame 200. The carrier body 100 is connected to the front end of the carrier frame 200. The lift carrier 10 moves in the longitudinal direction of the carrier frame 200. In the following description, the direction of movement of the lift carrier 10 (longitudinal direction of a vehicle) is defined as X direction, the lateral direction of the lift carrier 10 (lateral direction of the vehicle) is defined as Y direction, and the vertical direction of the lift carrier 10 is defined as Z direction. As for the direction of movement of the lift carrier 10, the direction toward the front of the vehicle is defined as +X direction.

The carrier body 100 includes a travelling device 110 that provides a function for causing the lift carrier 10 to travel, and a first lifting mechanism 120 that provides a function to lift and lower the carrier frame 200. The travelling device 110 moves the carrier frame 200 and the vehicle placed on the carrier frame 200 by driving drive wheels with actuators. The drive mechanism of the travelling device 110 is not limited. The travelling device 110 may be configured to move as desired by remote control or autonomous travelling.

The first lifting mechanism 120 is typically operated by an actuator. The mechanism of the first lifting mechanism 120 is not limited. For example, the carrier frame 200 may be lifted and lowered by a hydraulic cylinder, or the carrier frame 200 may be lifted and lowered by using an air pressure.

The carrier body 100 further includes a power source and a control device that are not shown in FIG. 1. The power source supplies power to various actuators included in the lift carrier 10. Typically, the power source is a battery, and is electrically connected to each of the actuators by a wire harness.

The control device outputs control signals for driving and controlling the various actuators included in the lift carrier 10. The actuators operate according to the control signals. The control device is configured to transmit information to each of the actuators. Typically, the control device is electrically connected to each of the actuators by a wire harness.

The control device may be a device provided outside the lift carrier 10. In this case, the control device is configured to transmit information to each of the actuators by communication.

The carrier frame 200 includes a first arm group 211 and a second arm group 212. The lift carrier 10 supports a four-wheeled vehicle by inserting the carrier frame 200 under the vehicle in the longitudinal direction of the vehicle and holding the front tires and rear tires of the vehicle by the first arm group 211 and the second arm group 212, respectively. Typically, the lift carrier 10 inserts the carrier frame 200 from the front of the vehicle. That is, the first arm group 211 holds the front tires of the vehicle and the second arm group 212 holds the rear tires of the vehicle to support the vehicle. Alternatively, the carrier frame 200 may be inserted from the rear of the vehicle to support the vehicle. The lift carrier 10 lifts the carrier frame 200 to lift the vehicle to be transported, and moves with the vehicle in the lifted state. The lift carrier 10 transports the vehicle in this manner.

The operation of holding the tires of the vehicle by the first arm group 211 and the second arm group 212 is implemented by first arm actuators 221 and second arm actuators 222, respectively. The first arm group 211 includes fixed arms AM11, AM12 and movable arms AM13, AM14. The fixed arm AM11 and the movable arm AM13 form a pair, and the fixed arm AM12 and the movable arm AM14 form a pair, each pair holding the front and rear of the tire tread. The fixed arms AM11, AM12 are fixed so as to protrude in the Y direction from the carrier frame 200. Therefore, the tires are held and released according to the movement of the movable arms AM13, AM14. The movable arms AM13, AM14 are movable by the first arm actuators 221. Typically, the movable arms AM13, AM14 are fixed to the carrier frame 200 such that they can rotate within a predetermined range about their roots (one ends) as support points. The first arm actuators 221 operate to switch the first arm group 211 between a supporting state in which the fixed arms AM11, AM12 and the movable arms AM13, AM14 hold the tire treads therebetween by aligning the axial directions of the movable arms AM13, AM14 with the Y direction, and the releasing state in which the tires are released by aligning the axial directions of the movable arms AM13, AM14 with the X direction.

The second arm group 212 includes movable arms AM21, AM22, AM23, and AM24. Since the movable arms AM21, AM22, AM23, and AM24 are arms fixed to a rear end frame 40, they are also referred to as "rear end arms." The movable arm AM21 and the movable arm AM23 form a pair and the movable arm AM22 and the movable arm AM24 form a pair each pair holding the front and rear of the tire tread. The movable arms AM21, AM22, AM23, and AM24 are individually movable by the second arm actuators 222. Typically, the movable arms AM21, AM22, AM23, and AM24 are fixed to the carrier frame 200 such that they can rotate within a predetermined range about their roots (one ends) as support points. The second arm actuators 222 operate to switch the second arm group 212 between a supporting state in which the movable arms AM21, AM22, AM23 and AM24 hold the tire treads therebetween by aligning the axial directions of the movable arms AM21, AM22, AM23 and AM24 with the Y direction and the releasing state in which the tires are released by aligning the axial directions of the movable arms AM21, AM22, AM23, and AM24 with the X direction. 2. Vehicle Transport Operation by Lift Carrier

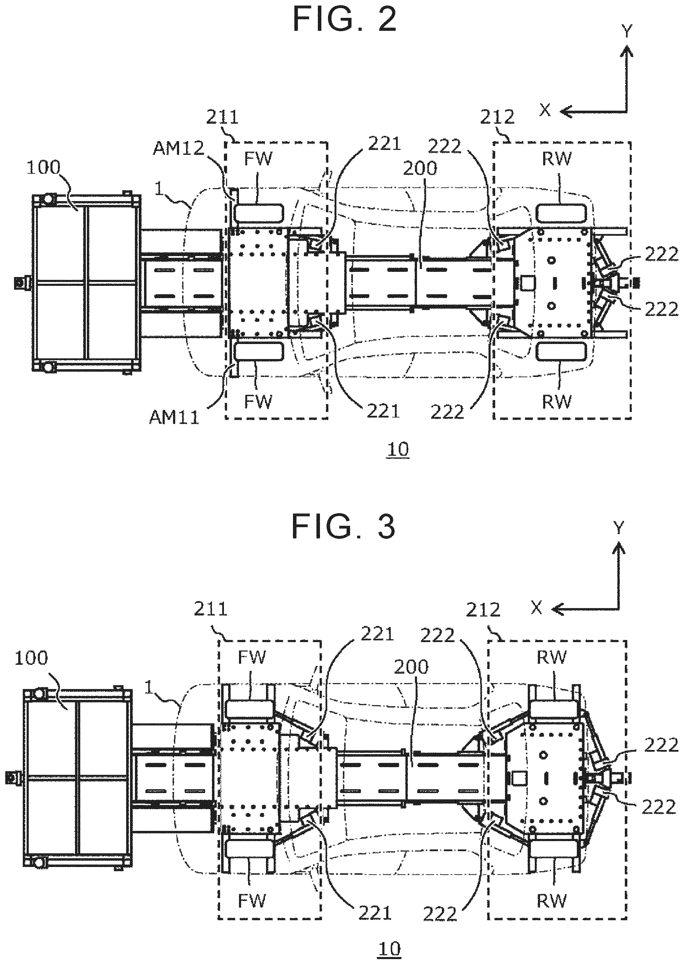

Next, the operation related to transport of a vehicle 1 that is to be transported by the lift carrier 10 according to the present embodiment will be described with reference to FIGS. 2 and 3. An example in which the lift carrier 10 inserts the carrier frame 200 from the front of the vehicle 1 to be transported will be described.

FIG. 2 is a top view of the lift carrier 10 with the first arm group 211 and the second arm group 212 in the releasing state in the operation of supporting the vehicle. FIG. 3 is a top view of the lift carrier 10 with the first arm group 211 and the second arm group 212 in the supporting state. In FIGS. 2 and 3, the vehicle 1 to be transported is shown in a transparent manner by long dashed short dashed lines.

As shown in FIG. 2, the lift carrier 10 inserts the carrier frame 200 under the vehicle 1 from the front of the vehicle 1 with both the first arm group 211 and the second arm group 212 in the releasing state. At this time, the lift carrier 10 inserts the carrier frame 200 until the fixed arms AM11, AM12 are into contact with the front tires FW of the vehicle 1. That is, the fixed arms AM11, AM12 function as guides for determining the insertion position of the carrier frame 200. As shown in FIG. 3, the first arm group 211 and the second arm group 212 are then switched to the supporting state, so that the first arm group 211 and the second arm group 212 hold the front tires FW and rear tires RW of the vehicle 1, respectively.

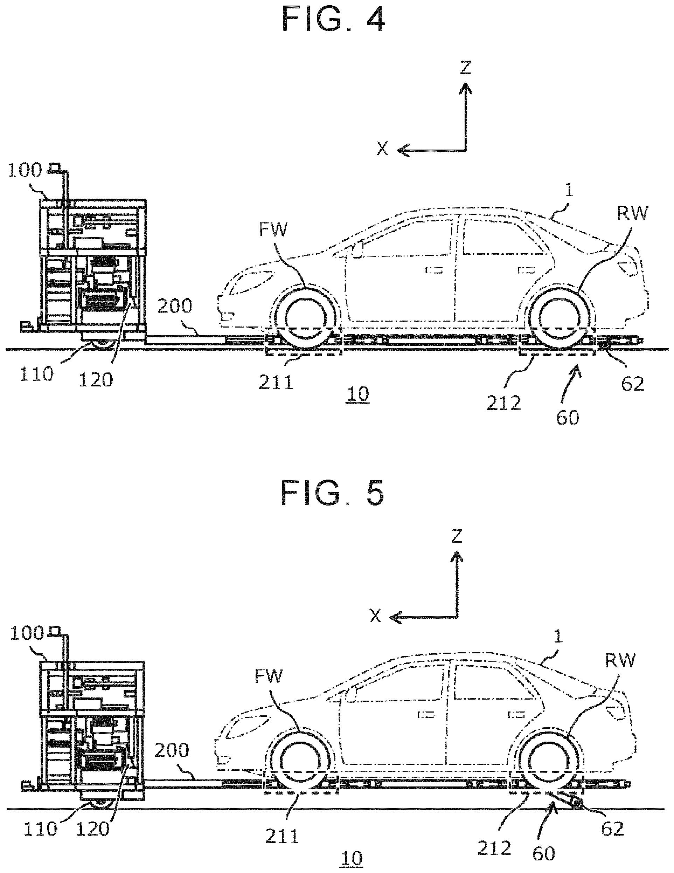

FIGS. 4 and 5 are side views of the lift carrier 10 and show an example of the operation of lifting the vehicle 1 to be transported. As shown in FIG. 4, the lift carrier 10 holds the tires FW, RW of the vehicle 1 by the first arm group 211 and the second arm group 212, respectively. As shown in FIG. 5, the lift carrier 10 then lifts the vehicle 1 by lifting the carrier frame 200 by the first lifting mechanism 120 and a second lifting mechanism 60 of the carrier frame 200. The second lifting mechanism 60 is a device for lifting and lowering a rear end portion of the carrier frame 200. As shown in FIG. 5, the carrier frame 200 is equipped with wheels 62. With the second lifting mechanism 60, the wheels 62 can remain in contact with the road surface when the carrier frame 200 is lifted. The lift carrier 10 transports the vehicle 1 by driving the travelling device 110 of the carrier body 100 with the vehicle 1 in the lifted state. The first lifting mechanism 120 and the second lifting mechanism 60 is examples of the "lifting mechanism" according to the present disclosure.

### 3. Characteristic Structure of Lift Carrier of Embodiment

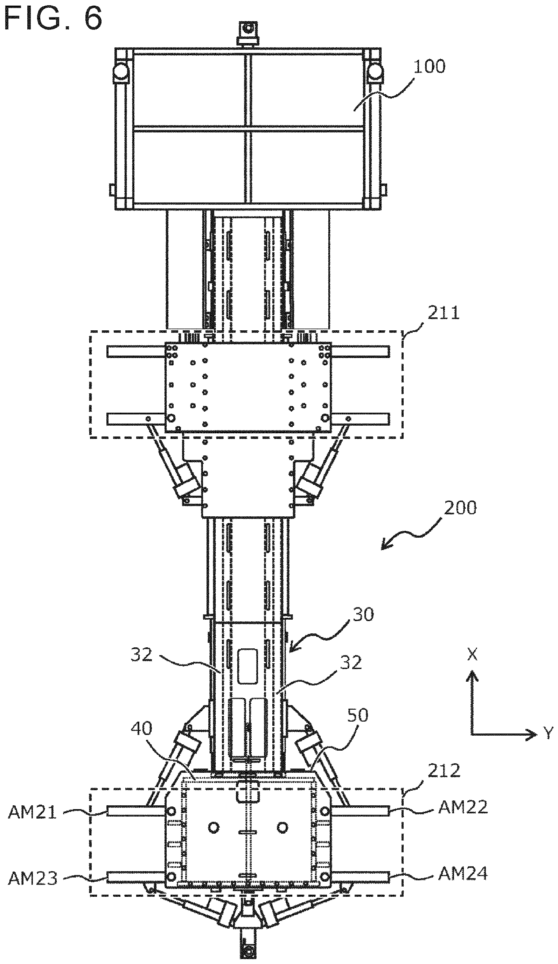

FIG. 6 is a top view of the lift carrier 10. As shown in FIG. 6, the carrier frame 200 includes a main frame 30 on the front end side and a rear end frame 40 on the rear end side. The main frame 30 supports the first arm group 211, and the rear end frame 40 supports the second arm group 212. The main frame 30 includes a pair of side frames 32 extending in the longitudinal direction of the vehicle (X direction). A top plate 50 covers the upper surface of the rear end frame 40. The side frames 32 of the main frame 30 and the rear end frame 40 are joined by welding.

The wheels 62 and the second arm group 212 are both supported by the rear end frame 40. Therefore, when the vehicle 1 is lifted by lifting the carrier frame 200 with the wheels 62 in contact with the ground, the rear end frame 40 is subjected to bending stress applied from the support points of the wheels 62 to the second arm group 212. Since the carrier frame 200 is structured to be inserted under the vehicle 1 (under the floor of the vehicle 1), there are restrictions on the dimensions in the height direction of the rear end frame 40. Therefore, the rear end frame 40 is required to have a structure for increasing the frame rigidity within the height restrictions.

The inventors of the present disclosure carried out intensive studies on a frame structure that provides sufficient rigidity of the rear end frame 40. As a result, the inventors of the present disclosure have found a frame structure that provides increased rigidity while suppressing an increase in the thickness in the height direction of the rear end frame 40.

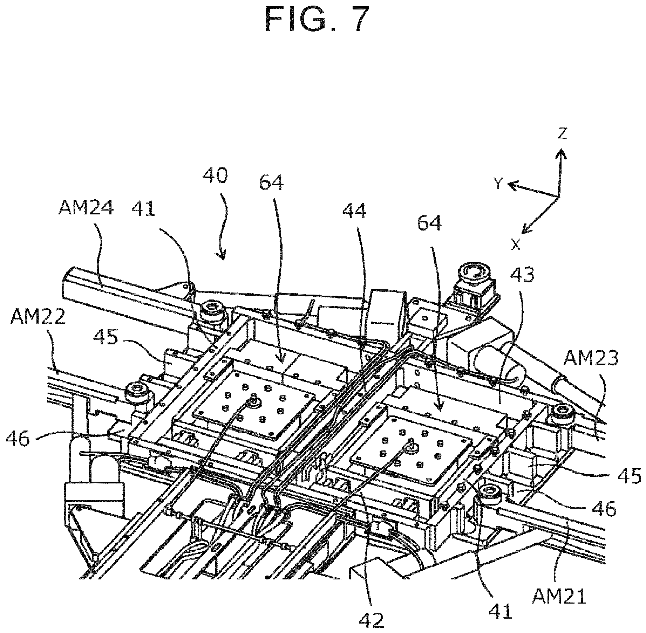

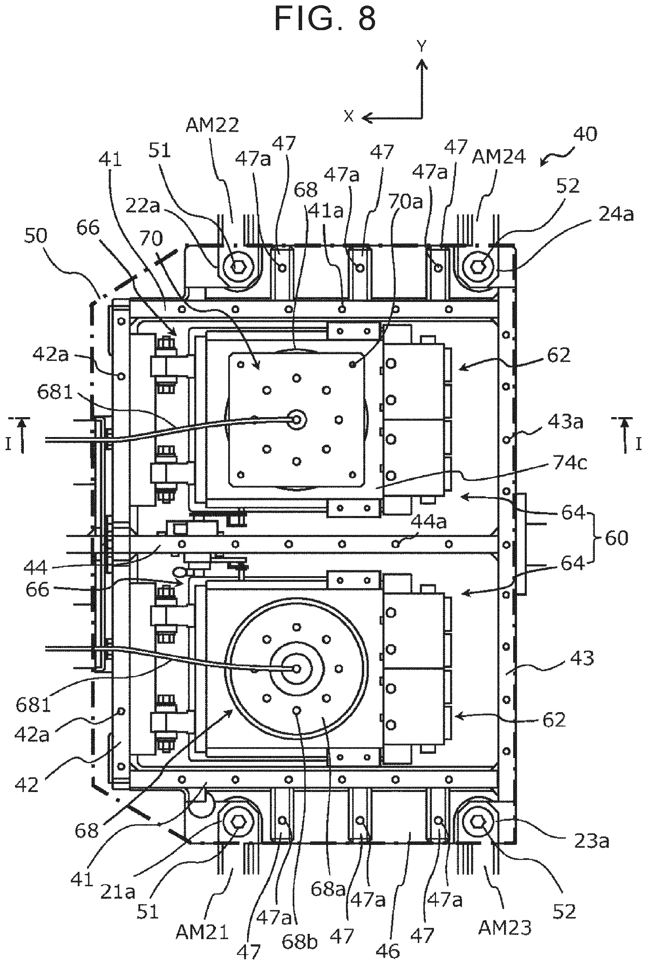

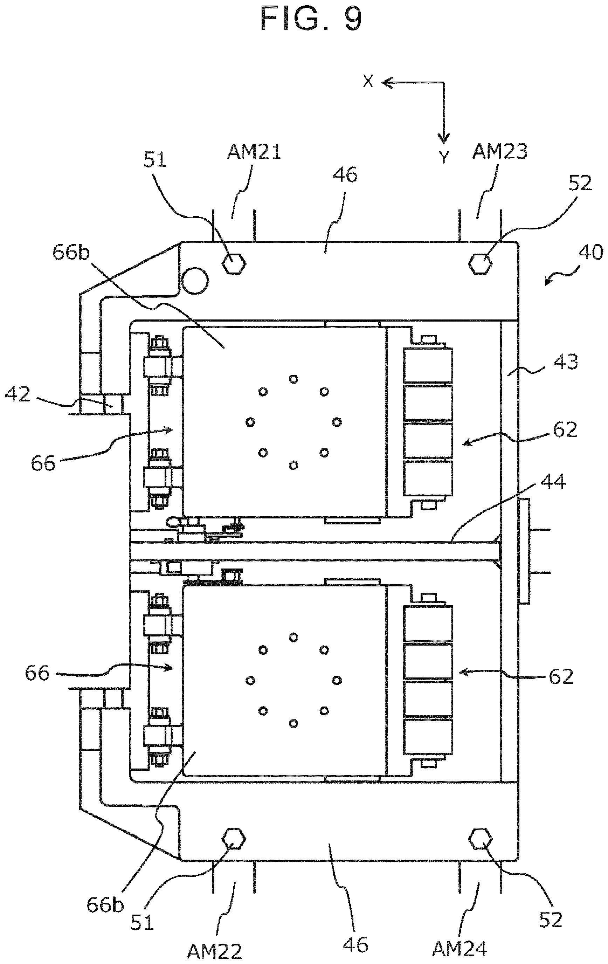

FIG. 7 is a perspective view of the structure around the rear end frame 40 of the lift carrier 10 as viewed obliquely from above. FIG. 7 illustrates the frame structure exposed by removing the top plate 50 covering the upper surface of the rear end frame 40. FIG. 8 is a top view of the rear end frame 40 of the lift carrier 10 and the structure around the rear end frame 40. In FIG. 8, the top plate 50 for the rear end frame 40 is shown in a transparent manner by a long dashed short dashed line such that the internal structure is seen through. A load distribution plate 70 for a lower lifting unit 64 in the figure is not shown in FIG. 8. FIG. 9 is a bottom view of the rear end frame 40 of the lift carrier 10 and the structure around the rear end frame 40. Hereinafter, a characteristic structure of the rear end frame 40 will be described with further reference to FIGS. 7 to 9.

### 3-1. Characteristic Structure of Rear End Frame 40

The rear end frame 40 includes a pair of side members 41, a first cross member 42, a second cross member 43, a reinforcing member 44, a plurality of ribs 47, and a pair of arm fixing plates 46.

The side members 41 extend in the longitudinal direction of the vehicle (X direction). The distance between the side members 41 in the lateral direction of the vehicle (Y direction) is greater than the width of the main frame 30.

The first cross member 42 is a member that connects the front ends of the side members 41 in the lateral direction of the vehicle (Y direction). The second cross member 43 is provided so as to connect the rear ends of the side members 41. The side members 41, the first cross member 42, and the second cross member 43 form the rectangular shape of the rear end frame 40. The combination of the first cross member 42 and the second cross member 43 is an example of the "pair of cross members" according to the present disclosure.

The reinforcing member 44 is a reinforcing member extending in the longitudinal direction of the vehicle (X direction) in the middle in the lateral direction of the vehicle (Y direction). The rear end of the reinforcing member 44 is in contact with the second cross member 43, and is welded around its contact surface to the second cross member 43. The front end of the reinforcing member 44 is welded to the middle portion of the first cross member 42. With this configuration, the inside of the rectangular rear end frame 40, namely the space surrounded by the rectangular rear end frame 40, is divided into two spaces, namely right and left spaces, by the reinforcing member 44.

### 3-2. Fixing Structure for Second Arm Group 212

The ribs 47 extending in parallel are connected to the side members 41 of the rear end frame 40. The ribs 47 extend outward in the lateral direction of the vehicle (Y direction) from the side members 41. The ribs 47 have the same height dimension in the Z direction as the side members 41. In the rear end frame 40 of the present embodiment, three ribs 47 are welded to each of the side members 41.

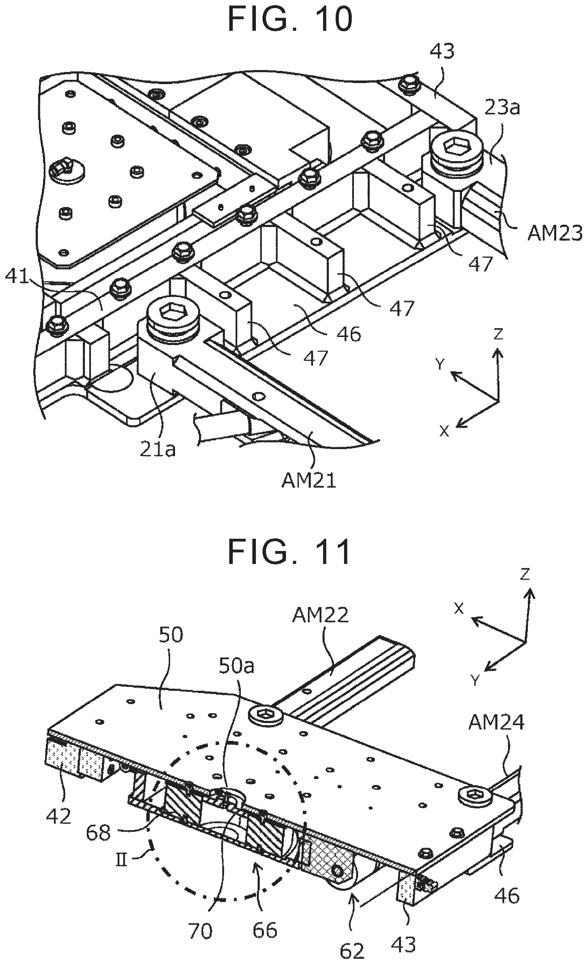

The arm fixing plates 46 are welded to the lower surfaces of the side members 41 and the lower surfaces of the ribs 47. FIG. 10 is a perspective view of the rear end frame 40 with the arm fixing plate 46 joined to the side member 41 and the ribs 47. As is also shown in FIG. 10, each arm fixing plate 46 protrudes in a rectangular shape beyond a corresponding one of the side members 41 outward in the lateral direction of the vehicle (Y direction). The amount by which the arm fixing plate 46 protrudes beyond the side member 41 is the same as the amount by which the ribs 47 protrude from the side member 41.

The top plate 50 is fixed to the upper surface of the rear end frame 40. The top plate 50 is a cover that covers the entire upper surface of the rear end frame 40 including the arm fixing plates 46, and is a plate with a predetermined thickness. The side members 41, first cross member 42, second cross member 43, reinforcing member 44, and ribs 47 of the rear end frame 40 have a plurality of bolt holes 41a, 42a, 43a, 44a, and 47a, respectively. Typically, the top plate 50 is fastened to the rear end frame 40 with bolts using these bolt holes 41a, 42a, 43a, 44a, and 47a.

Arm fixing portions 21a, 22a, 23a, and 24a of the movable arms AM21, AM22, AM23, and AM24 of the second arm group 212 are located outward of the side members 41 in the Y direction, and are rotatably fixed between the top plate 50 and the arm fixing plates 46. Typically, each of the arm fixing portions 21a, 22a of the movable arms AM21, AM22 is fixed by a bolt 51 at a position forward of the rib 47 at the foremost in the X direction and rearward of the first cross member 42 in the X direction. Each of the arm fixing portions 23a, 24a of the movable arms AM23, AM24 is fixed by a bolt 52 at a position rearward of the rib 47 at the rearmost in the X direction and forward of the second cross member 43 in the X direction.

According to such a fixing structure for the second arm group 212, the top plate 50 is fastened to the rear end frame 40 with bolts using the bolt holes 41a, 42a, 43a, 44a, 47a. Such fastening with the bolts increases the fixing strength of the top plate 50 to the rear end frame 40 around the arm fixing portions 21a, 22a, 23a, and 24a. As a result, the frame rigidity around the fixing portions of the second arm group 212 is improved. In particular, fastening with bolts using the bolt holes 47a greatly contributes to improvement in frame rigidity around the arm fixing portions 21a, 22a, 23a, and 24a.

### 3-3. Characteristic Structure of Second Lifting Mechanism 60 and Components Around Second Lifting Mechanism 60

The second lifting mechanism 60 is configured to lift and lower the second arm group 212 via the rear end frame 40. Specifically, the second lifting mechanism 60 includes two lifting units 64. The two lifting units 64 are located next to each other in the lateral direction of the vehicle (Y direction) in the two spaces inside the rear end frame 40. That is, each of the two spaces inside the rear end frame 40 functions as a storage chamber that store a corresponding one of the two lifting units 64.

Each of the lifting units 64 includes a wheel support 66 and an air spring 68. One end (base end) of the wheel support 66 is rotatably supported by the first cross member 42. The wheel 62 is connected to the other end (tip end) of the wheel support 66. As shown in FIG. 8, the wheel supports 66 together with the wheels 62 can be stored inside the rear end frame 40.

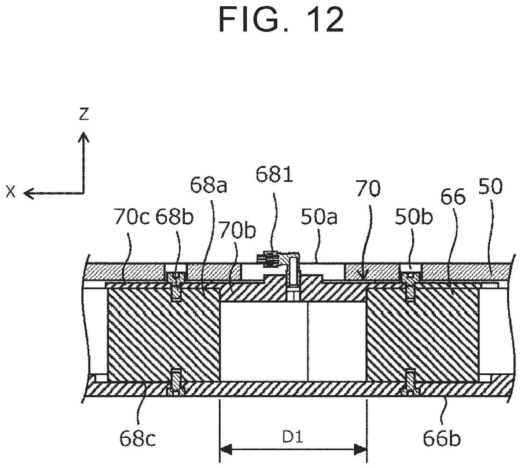

FIG. 11 is a perspective view of the rear end frame and components around the rear end frame 40 taken along line I-I in FIG. 8. FIG. 12 is an enlarged sectional view of a region II in FIG. 11. The air spring 68 is interposed between the wheel support 66 and the top plate 50. Compressed air is supplied to the air spring 68 via an air pipe 681. An air pump (not shown) that supplies compressed air to each air spring 68 is mounted on, for example, the carrier body 100. The air pump is, for example, an electric air pump. The pressure of the compressed air supplied to each air spring 68 is controlled by, for example, the control device of the carrier body 100.

The air spring 68 expands and contracts in the Z direction according to the pressure of the supplied compressed air, and generates a spring force for lifting and lowering the carrier frame 200. In other words, the air spring 68 is a pneumatic actuator for lifting and lowering the carrier frame 200. Additionally, as an example, the air spring 68 is an accordion-shaped bellows air spring. As shown in the lower lifting unit 64 in FIG. 8, each air spring 68 has a cylindrical shape.

An upper end face 68a of each air spring 68 in the Z direction is fastened to the load distribution plate 70 using bolt holes 68b. Each load distribution plate 70 is fastened to the top plate 50 using bolt holes 70a located at the four corners of the load distribution plate 70. The top plate 50 has a through hole 50a at a position where the top plate 50 interferes with the air pipe 681 in order to allow the air pipe 681 to pass therethrough.

A lower end face 68c of the air spring 68 in the Z direction is fastened to a bottom wall 66b of the wheel support 66. In order to increase the pressure receiving area of the top plate 50, the load distribution plate 70 is interposed between the air spring 68 and the top plate 50. The load distribution plate 70 is a quadrangular plate, and has a larger surface area than the upper end face 68a of the air spring 68. The load distribution plate 70 has a thick portion 70b on its back. The thick portion 70b has a cylindrical shape and protrudes into the inside of the cylindrical air spring 68 with a cylindrical inner diameter D1. The thick portion protruding into the inside of the air spring 68 is thicker than a remainder of the load distribution plate 70. The diameter of the thick portion 70b is smaller than the cylindrical inner diameter D1 of the air spring 68. A region of the load distribution plate 70 that is exposed to the inside of the air spring 68 directly receives the internal pressure of the air spring 68. The thick portion 70b is a structure provided in order to increase the pressure resistance of the region that is subjected to a high pressure. The load distribution plate 70 thus suitably distributes the load applied from the air spring 68 to the top plate 50.

According to the frame structure of the carrier frame 200 configured as described above, the frame rigidity can be increased without increasing the thickness in the height direction (Z direction) of the rear end frame 40. As a result, the bending strength of the carrier frame 200 due to the weight of the vehicle 1 to be transported can be increased.

### 4. Modifications

The following modified embodiments may be applied to the frame structure of the lift carrier 10 of the present embodiment.

The number of lifting units 64 in the second lifting mechanism 60 is not limited to two. The second lifting mechanism 60 need only include at least one lifting unit 64. For example, when the rear end frame 40 does not include the reinforcing member 44, one lifting unit 64 may be stored in one storage space inside the rear end frame 40.

The shape of the load distribution plate 70 is not limited as long as the load distribution plate 70 has a larger contact area with the top plate than the upper end face 68a of the air spring 68 and can withstand the internal pressure of the air spring 68.

## Claims

1. A lift carrier (10) comprising:
a carrier frame (200) that is inserted, in a longitudinal direction of a vehicle (1) to be transported, under the vehicle (1);
a plurality of arms configured to protrude outward in a lateral direction of the vehicle from the carrier frame (200) at positions forward and rearward of treads of a plurality of tires of the vehicle (1) and support the tires when in a supporting state;
a lifting mechanism that lifts and lowers the vehicle (1) by lifting and lowering the carrier frame (200) in the supporting state; and
a carrier body (100) connected to a front end side of the carrier frame (200) and configured to move the carrier frame (200) as desired in the supporting state,
the carrier frame (200) including
a main frame (30) extending from the front end side of the carrier frame (200) toward a rear end side of the carrier frame (200), and
a rear end frame (40) joined to the main frame (30) and located on the rear end side of the carrier frame (200), wherein:
the rear end frame (40) includes
a pair of side members (41),
a pair of cross members provided so as to connect ends of the side members (41), and
a pair of arm fixing plates (46) provided so as to protrude outward in the lateral direction of the vehicle beyond lower surfaces of the side members (41);
a top plate (50) covering the rear end frame (40) is located on an upper surface of the rear end frame (40);
the arms include a plurality of rear end arms supported by the rear end frame (40);
the lifting mechanism includes at least one lifting unit (64) stored inside the rear end frame (40);
the top plate (50) is fixed to the rear end frame (40);
the top plate (50) fixes the rear end arms at positions at which the rear end arms are sandwiched between the top plate (50) and the arm fixing plates (46); and
the top plate (50) fixes an upper end face of the at least one lifting unit (64).

2. The lift carrier (10) according to claim 1, wherein:
arm fixing portions (21a, 22a, 23a, 24a) of the rear end arms are located between the cross members in the longitudinal direction of the vehicle; and
the top plate (50) is fixed to the cross members and the side members (41).

3. The lift carrier (10) according to claim 1 or 2, wherein:
the at least one lifting unit (64) includes an air spring (68) that expands and contracts according to a pressure of compressed air,
the lift carrier further comprising a load distribution plate (70) interposed between the air spring (68) of the at least one lifting unit (64) and the top plate (50).

4. The lift carrier (10) according to claim 3, wherein:
the air spring (68) has a cylindrical shape; and
the load distribution plate (70) includes a thick portion (70b) with a cylindrical shape and protruding into an inside of a cylinder of the air spring (68), the thick portion (70b) being thicker than a remainder of the load distribution plate (70).

5. The lift carrier (10) according to any one of claims 1 to 4, further comprising a reinforcing member provided between the cross members and extending in the longitudinal direction of the vehicle so as to divide a space inside the rear end frame (40) into two storage chambers;
the reinforcing member is fixed to the top plate (50);
the at least one lifting unit (64) is two lifting units (64); and
the two lifting units (64) are independently stored in the two storage chambers.

6. The lift carrier (10) according to any one of claims 1 to 5, wherein:
the rear end frame (40) includes a plurality of ribs (47) provided so as to extend outward in the lateral direction of the vehicle from the side members (41);
the ribs (47) are joined to the arm fixing plates (46); and
the top plate (50) is fixed to the ribs (47).

7. The lift carrier (10) according to claim 6, wherein an amount by which the arm fixing plates (46) protrude beyond the side members (41) is equal to an amount by which the ribs (47) protrude from the side members (41).
